# EUROPÄISCHE PATENTANMELDUNG

(11) **EP 1 482 661 A2**
(43) Veröffentlichungstag der Anmeldung: **01.12.2004**
(21) Anmeldenummer: 04291951.4
(22) Anmeldetag: 23.02.1998
(51) Int. Cl.: H04B 7/26

(54) **Verfahren zur Weitergabe von Informationen zwischen beweglichen Körpern und Kommunikationseinrichtung zur Durchführung des Verfahrens**

(30) Priorität: 25.02.1997 DE 19707537
(62) Teilanmeldung aus: 98440035.8
(71) Anmelder: ALCATEL, 75008 Paris (FR)
(72) Erfinder: Beier, Wolfgang, 71263 Weil der Stadt (DE); Idler, Horst, 70439 Stuttgart (DE)
(74) Vertreter: Rausch, Gabriele, Dr.

(57) **Zusammenfassung**

Verfahren zur Weitergabe von Informationen zwischen beweglichen Körpern, insbesondere Fahrzeugen (3, 4, 5, 8 8'), wobei jeder bewegliche Körper einer Kommunikationseinrichtung (6) zum Empfangen und Absenden von Funktelegrammen (7) aufweist. Um eine Information sehr schnell an sehr viele bewegliche Körper weitergeben zu können, ist vorgesehen, dass
ein Funktelegramm (7) generiert wird, welches die Information und
Limitparameter, die eine Beendigung der Informationsweitergabe signalisieren, enthält, mindestens einer der beweglichen Körper das Funktelegramm (7) empfängt und an jeden anderen beweglichen Körper, der in die Reichweite des Funktelegramms (7) gelangt, absendet und zur kaskadenartigen Ausbreitung der Information jeder andere bewegliche Körper, der das Funktelegramm (7) empfangen hat, dieses an jeden weiteren beweglichen Körper, der in die Reichweite des Funktelegramms (7) gelangt, absendet.

## Beschreibung

Die Erfindung betrifft ein Verfahren zur Weitergabe von Informationen zwischen beweglichen Körpern gemäß dem Oberbegriff des Patentanspruchs 1 und eine Kommunikationseinrichtung zur Durchführung des Verfahrens gemäß dem Oberbegriff des Anspruchs 4.

Bekannt sind Kommunikationssysteme, bei denen Informationen vermittels eines entsprechend modulierten Funktelegramms ausgehend von einem festen oder mobilen Sender an einen bestimmten Empfänger übermittelt werden. Für viele Anwendungen reicht diese bilaterale Kommunikation vollkommen aus. Jedoch gibt es einen zunehmenden Bedarf für multilateralen Informationsaustausch zwischen beweglichen Körpern. Unter bewegliche Körper sind hier jegliche relativ zueinander ortsveränderliche Körper im weitesten Sinne zu verstehen, beispielsweise auch führerlose Transportsysteme, die mit einer eigenen Intelligenz ausgerüstet sind und ihre Bewegungen untereinander koordinieren. Im Folgenden beziehen sich die Betrachtungen jedoch vorrangig auf Fahrzeuge des Straßen-, Schienen- und Luftverkehrs.

Der Erfindung liegt die Aufgabe zugrunde, ein Verfahren und eine Kommunikationseinrichtung anzugeben, durch die eine Information sehr schnell an sehr viele bewegliche Körper, insbesondere Fahrzeuge weitergegeben werden kann.

Erfindungsgemäß wird die Aufgabe durch die kennzeichnenden Merkmale der Ansprüche 1 bzw. 4 gelöst. Die Informationsweitergabe beruht dabei auf die kaskadenartige Ausbreitung eines Funktelegramms, wobei die Kommunikationseinrichtung jedes Fahrzeugs quasi als Relaisstation dient. Das ursprüngliche Funktelegramm, das zur Weiterleitung bestimmt ist, kann sowohl von einem ortsfesten Sender, als auch von einem Fahrzeug generiert werden. Zur Beendigung der Informationsweitergabe enthält das Funktelegramm Limitparameter. Ein solcher Limitparameter kann eine vorgegebene Verbreitungszeit, ein räumliches Verbreitungsgebiet, in dem die betreffende Information interessiert, oder auch eine Antwort auf eine Anfrage sein.

Von Interesse kann beispielsweise der Aufenthaltsort eines, insbesondere durch die Polizei gesuchten Fahrzeuges sein. Gemäß Anspruch 2 enthält dazu jede Kommunikationseinrichtung eine fahrzeugspezifische Kennung, die im Falle des Eintreffens eines Funktelegramms automatisch an das Funktelegramm angefügt und weitergesendet wird. Die Kennung des Fahrzeugs, von dem das Funktelegramm empfangen wurde, kann auch durch diese neue Kennung überschrieben werden.

Entsprechend einer in Anspruch 3 beschriebenen vorteilhaften Weiterbildung wird bei Vorliegen des Ergebnisses der Anfragen ein neues Funktelegramm, das dieses Ergebnis beinhaltet, generiert und verbreitet. Das Suchergebnis wird folglich nach einiger Zeit auf die gleiche Art und Weise wie die Anfrage an die anfragende Stelle, beispielsweise ein Polizeirevier, zurückgesandt. Es ist jedoch auch möglich, das Suchergebnis an einer anderen Stelle der Kommunikationskaskade abzuholen.

Die Verbreitungsgeschwindigkeit eines Funktelegramms bzw. die Zeit, die zwischen der Verbreitung einer Anfrage und dem Vorliegen einer Antwort vergeht, hängt ganz entscheidend von der Ausrüstungsdichte der Fahrzeuge mit der Kommunikationseinrichtung zum Empfangen und Absenden von Funktelegrammen ab. Bei einer Ausrüstungsdichte von etwa 0,1 % und einer Reichweite des Funktelegramms von ca. 100 m wird sich eine Information in ganz Deutschland in etwa 10 Stunden ausbreiten. Beträgt die Ausrüstungsdichte 10 %, verringert sich die Verbreitungszeit für Deutschland auf wenige Sekunden.

Ein gesuchtes Fahrzeug wird sich einem anderen Fahrzeug, das die Suchmeldung verbreitet, als das gesuchte Fahrzeug auch dann zu erkennen geben, wenn es abgestellt wurde. Dann läuft eine neue (stille) Meldung, wo das gesuchte Fahrzeug gefunden wurde, in gleicher Weise zurück bis zum Absender der Suchmeldung, insbesondere der Polizei, die dann gezielt das Fahrzeug ausfindig machen kann. Vorzugsweise ist dazu eine Sende- und Empfangsantenne in der Windschutzscheibe eingeschmolzen und als Retroreflektor ausgebildet. Der Retroreflektor antwortet auch dann, wenn die restlichen Baugruppen der Kommunikationsanlage nicht in Betrieb sind oder durch Manipulation stillgelegt wurden.

Belange des Datenschutzes lassen sich dadurch berücksichtigen, daß ein gesuchtes Fahrzeug sich nur dann zu erkennen gibt, wenn der anfragenden Stelle, insbesondere der Polizei, ein Schlüssel bekannt ist, den an sich nur der Fahrzeugbesitzer mitteilen kann, wobei dieser Schlüssel Bestandteil der Fahrzeugkennung ist.

Das beanspruchte Verfahren zeichnet sich insbesondere durch Schnelligkeit und Wirtschaftlichkeit aus. Eine besondere Infrastruktur ist nicht erforderlich, so dass Kommunikationskosten nicht anfallen.

Um dem Fahrzeugbesitzer einen Anreiz zu geben, die Kommunikationseinrichtung zu erwerben, sollte die Kommunikationseinrichtung gemäß Anspruch 4 neben Einrichtungen zum Empfangen und Absenden von Funktelegrammen auch eine Einrichtung zum Auswerten des Funktelegramms aufweisen. Dadurch dient das Fahrzeug nicht nur als passive Relaisstation, in der Informationen empfangen und weiterverbreitet werden. Zusätzlich ergibt sich die Möglichkeit, alle oder bestimmte Informationen, die das Funktelegramm beinhaltet, für eigene Zwecke zu nutzen.

Solche Informationen werden entsprechend Anspruch 5 bevorzugt optisch oder akustisch angezeigt. Dabei kann es sich beispielsweise um Informationen über die Verkehrsdichte handeln. Fahrzeuge, die selbständig Staus ermitteln können, indem z.B. das Geschwindigkeitsprofil oder der Pannenblinker anderer Fahrzeuge ausgewertet wird, senden eine entsprechende Information in die Umgebung. Diese Information sowie die entsprechende Information über die Stauauflösung verbreiten sich dann nach dem oben beschriebenen Verfahren. Als Limitparameter kommen hier vorrangig örtliche Beschränkungen in Frage, so dass das Verbreitungsgebiet die Größe aufweist, in der zu erwarten ist, dass eine Stauinformation interessiert. Des weiteren können Fahrzeuge auch selbständig den Straßenzustand, insbesondere die Rutschfestigkeit ermitteln. Als Messwerte können hierfür die Außentemperatur und der an den Antriebsrädern ermittelte Schlupf verwendet werden. Von praktischer Bedeutung ist darüber hinaus die Erkennung von freien oder gerade frei gewordenen Parkplätzen. Fahrzeuge können selbständig erkennen, wenn sie einen Parkplatz verlassen. Diese Tatsache und die Position des Parkplatzes kann über ein Funktelegramm verbreitet werden. Die Einrichtung zum Auswerten der Funktelegramme visualisiert interessierten Fahrern anderer Fahrzeuge diese Information. Fahrzeuge können des weiteren selbständig erkennen, wenn sie in einen Unfall verwickelt sind. Die Position des Unfalls, ggf. zusammen mit Einzelheiten, die ein Rettungsdienst interessiert, können über ein Funktelegramm automatisch verbreitet werden. Die Fahrer anderer Fahrzeuge können diese Information nutzen, um Folgeunfälle zu vermeiden. Fahrzeuge, die mit einer Kartennavigationseinrichtung ausgestattet sind, können selbständig Abweichungen zwischen dem gefahrenen Weg und den eingetragenen Straßen ermitteln. Das können entweder neu gebaute Straßen oder Änderungen durch Baustellen sein. Gelegentliche Fahrten über die Wiese können dadurch erkannt werden, daß sie sich nicht wiederholen. Die so gewonnenen Informationen über Kartenänderungen können bei Funktelegrammverbreitung mittels der Einrichtung zum Auswerten der Funktelegramme anderen Fahrzeugen und ortsfesten Zentralen und dergleichen übermittelt werden.

Anspruch 6 betrifft die Ermittlung der Eigenposition und die Unterstützung anderer Fahrzeuge in derselben Aufgabe. Fahrzeuge, die ihre relative Position zu anderen Fahrzeugen mit Hilfe der Funktelegramme bestimmen können, können ihre eigene absolute Position bestimmen, wenn sie absolute Positionsangaben von einem anderen Fahrzeug verwenden. Die auf diese Weise ermittelte absolute Position wird zu anderen Fahrzeugen übertragen, die daraus ihre eigene absolute Position ermitteln. Die Genauigkeit nimmt bei jedem Weiterkoppeln ab. Gelegentlich sind aber Fahrzeuge in der Reichweite des Funktelegramms, die eine absolute Position direkt durch Kartenkorrelation und / oder GPS ermitteln können, wodurch Fehler infolge des Weiterkoppeln korrigiert werden. In der Praxis wird sich für alle beteiligten Fahrzeuge eine akzeptable Genauigkeit ergeben, wenn eine Mindestdichte von Fahrzeugen mit absoluter Positionsbestimmung vorhanden ist. Um diese Dichte zu erhöhen, können auch, beispielsweise am Straßenrand montierte, Sendebaken verwendet werden. Derartige Sendebaken, die permanent ein Positionssignal aussenden, sind besonders vorteilhaft für Positionsbestimmungen, deren Höhenkoordinate wichtig ist, beispielsweise in Parkhäusern, einsetzbar.

Eine Kommunikationseinrichtung mit einer Einrichtung zum Auswerten von Funktelegrammen lässt sich gemäß Anspruch 7 bevorzugt für Flottenmanagementaufgaben, insbesondere des ÖPNV (öffentlicher Personennahverkehr), von Speditionen und Mietwagenfirmen nutzen. Die Flottenmitglieder kommunizieren mit Zentralen und untereinander, ohne dass sie auf eine kostenträchtige Infrastruktur zur Informationsübermittlung angewiesen sind.

Bevorzugt basiert die Kommunikationseinrichtung entsprechend Anspruch 8 auf die Nutzung der DSRC-Frequenzen (dedicated short range communication) 5,8 GHz und / oder 64 GHz, wobei die Reichweite des Funktelegramms ca. 100 m beträgt und die Datenrate im Mbit/sec-Bereich liegt.

Die Erfindung wird nachfolgend anhand zweier figürlicher Darstellungen näher erläutert.

Es zeigen:
- Figur 1: eine symbolhafte Veranschaulichung des Verfahrens und
- Figur 2: eine schematische Darstellung der Komponenten zur Realisierung des Verfahren.

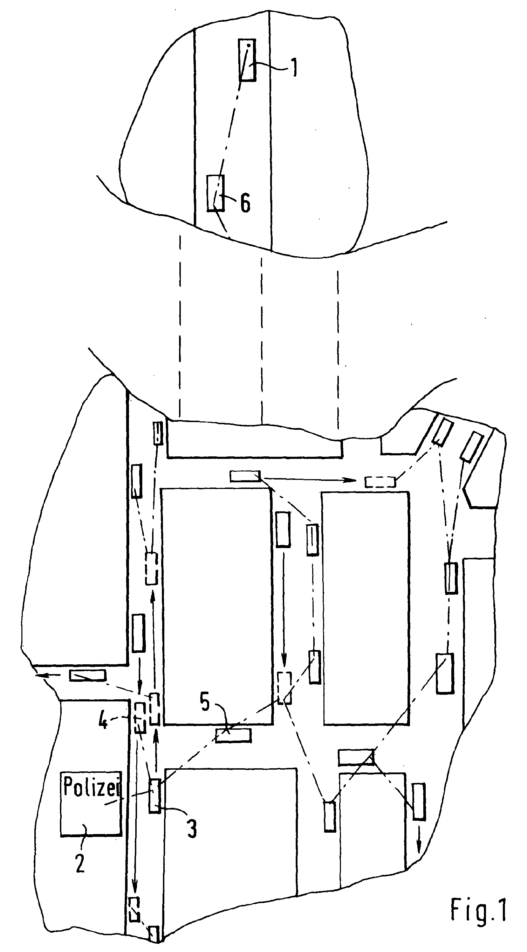

Figur 1 zeigt am Beispiel einer polizeilichen Suchmeldung das Auffinden eines Fahrzeuges 1 einer bestimmten Kennung mit Schlüsselangaben des Fahrzeugbesitzers. Erstmals ausgesandt wurde das Funktelegramm (Strich-Punkt-Darstellung), das die Anfrage und Limitparameter zum Beenden der Anfrage umfasst, von einem Polizeirevier 2 zum Zeitpunkt (t₁). Ein zufällig vorbeifahrendes erstes Fahrzeug 3 ist der erste Empfänger dieses Funktelegramms. Unmittelbar danach gelangen ein zweites Fahrzeug 4 und ein drittes Fahrzeug 5 in die Reichweite des Funktelegramms, das nunmehr von dem ersten Fahrzeug 3 ausgesandt wird. Die drei Fahrzeuge 3, 4 und 5 geben das Funktelegramm mit der Suchanfrage an jedes in die Reichweite des Funktelegramms kommende Fahrzeug weiter, welches seinerseits auf die gleiche Weise für die weitere Verbreitung sorgt. Es ist ersichtlich, dass selbst bei geringer Reichweite des Funktelegramms und geringer Ausrüstungsdichte der Gesamtzahl der Fahrzeuge mit einer zum Senden und Empfangen erforderlichen Kommunikationseinrichtung eine kaskadenartige Ausbreitung mit explosionsartiger Geschwindigkeit erfolgt. Bei einer Reichweite von ca. 100 m und einer Ausrüstungsdichte von etwa 10 % hat sich die Information innerhalb weniger Sekunden über das gesamte Territorium der Bundesrepublik Deutschland ausgebreitet. Das gesuchte Fahrzeug 1 wird folglich von einem Fahrzeug 6 zu einem Zeitpunkt t₂ angefunkt, wobei auch bei Fortsetzung der Fahrt durch das gesuchte Fahrzeug und gleichartigem Retourweg eine Eingrenzung auf ein relativ kleines Suchgebiet möglich ist. Auch wenn der Retourweg, d.h. die Übermittlung der Antwort von dem gesuchten Fahrtzeug 1 an das Polizeirevier 2 über eine andere Wegstrecke, die sich aus der Funkübertragung zwischen anderen Fahrzeugen zusammensetzt, besteht, kann wegen der sehr schnellen Durchmischung und Mehrfachkontaktierung nur eine Gesamtzeit zwischen dem Aussenden der Anfrage durch das Polizeirevier 2 und dem Empfang einer Antwort durch das Polizeirevier 2 von näherungsweise δt = 2 (t₂ - t₁) ergeben.

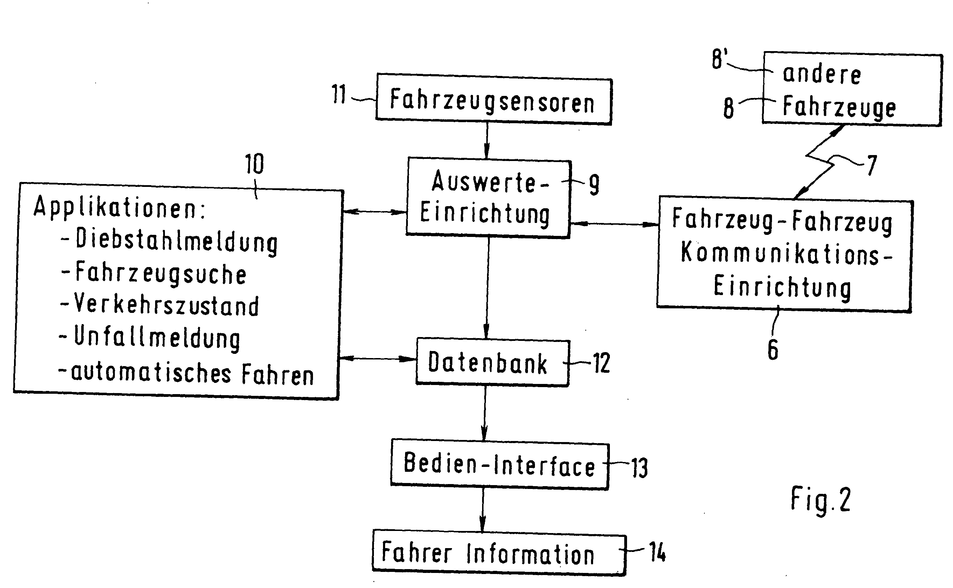

Figur 2 veranschaulicht das Zusammenwirken der wichtigsten Komponenten einer Fahrzeugausstattung zur Durchführung des Informationsverbreitungsverfahrens, welches anhand der Figur 1 beispielhaft beschrieben ist. Zentrale Baugruppe ist eine Kommunikationseinrichtung 6, die Funktelegramme 7 von anderen Fahrzeugen 8 empfängt und an andere Fahrzeuge 8' absendet. Die Kommunikationseinrichtung 6 wirkt mit einer Auswerteeinrichtung 9 zusammen. Diese Auswerteeinrichtung 9 verarbeitet je nach Applikation 10 Informationen, die die Kommunikationseinrichtung 6 von anderen Fahrzeugen 8 empfangen hat und Daten von Fahrzeugzensoren 11. Über eine Datenbank 12, die mit den Applikationen 10 zusammenwirkt, werden die Ausgangssignale der Auswerteeinrichtung 9 einem Bedien-Interface 13 zugeführt. Entsprechend der am Bedien-Interface 13 eingestellten Optionen erfolgt eine optische und / oder akustische Signalisierung 14 der ausgewerteten Informationen. Der Fahrer eines derartig ausgestatteten Fahrzeuges kann über das Bedien-Interface 13 Applikationen 10 auswählen, die mit Hilfe gleichartig ausgestatteter Fahrzeuge 8, 8' z.B. die Fahrzeugsuche bei Diebstahl erleichtern, den Verkehrszustand visualisieren, eine Unfallmeldung verbreiten oder das automatische Fahren unterstützen können.

Die Erfindung beschränkt sich nicht auf die vorstehend angegebenen Ausführungsbeispiele. Vielmehr ist eine Ausführung der Erfindung auch bei Verwendung grundsätzlich anders gearteter Baugruppen möglich. Insbesondere beschränkt sich die Erfindung nicht auf die Realisierung mit analogen Bauelementen, sondern ist auf vorteilhafte weise auch mittels integrierter Logik-Bauelemente realisierbar.

## Patentansprüche

1. Verfahren zur Weitergabe von Informationen zwischen beweglichen Körpern, insbesondere Fahrzeugen (3, 4,5,8 8'), wobei jeder bewegliche Körper eine Kommunikationseinrichtung (6) zum Empfangen und Absenden von Funktelegrammen (7) aufweist, wobei
ein Funktelegramm (7) generiert wird, welches die Information enthält,
mindestens einer der beweglichen Körper das Funktelegramm (7) empfängt und an jeden anderen beweglichen Körper, der in die Reichweite des Funktelegramms (7) gelangt, absendet und
zur kaskadenartigen Ausbreitung der Information jeder andere bewegliche Körper, der das Funktelegramm (7) empfangen hat, dieses an jeden weiteren beweglichen Körper, der in die Reichweite des Funktelegramms (7) gelangt, absendet,
**dadurch gekennzeichnet,**
**dass** das Funktelegramm eine Kennung enthält, die ausgesendet wird
**dass** der bewegliche Körper mit der gesuchten Kennung die Aussendung der Funktelegramme beendet,
und **dass** der bewegliche Körper seine gesuchte Kennung mit einem Funktelegramm versendet.

2. Verfahren nach Anspruch 1, **dadurch gekennzeichnet, dass** die Funktelegramme Limitparameter enthalten, die zur Beendigung der Informationsweitergabe dienen, wobei der Limitparameter eine vorgegebene Verbreitungszeit und/oder ein räumliches Verbreitungsgebiet ist.

3. Verfahren nach Anspruch 1, **dadurch gekennzeichnet, dass** die Informationen Anfragen, insbesondere bezüglich des Aufenthaltsortes eines beweglichen Körpers einer bestimmten Kennung, umfassen, wobei das Ergebnis der Anfragen als neues Funktelegramm (7) verbreitet wird.

4. Kommunikationseinrichtung (6) für Fahrzeuge (3, 4, 5, 8, 8'), wobei Einrichtungen zum Empfangen, Auswerten und Absenden von Funktelegrammen (7) vorgesehen sind, wobei die Einrichtung zum Absenden eingerichtet ist, ein empfangenes Funktelegramm an jeden anderen beweglichen Körper, der in die Reichweite des Funktelegramms gelangt, abzusenden, **dadurch gekennzeichnet, dass** die Kommunikationseinrichtung eingerichtet ist, den Informationsgehalt und eine Kennung der Funktelegramme auszuwerten, wobei die Kommunikationseinrichtung Mittel aufweist, die bei Erkennen der gesuchten Kennung die Aussendung der Funktelegramme zu beenden.

5. Kommunikationseinrichtung (6) nach Anspruch 4, **dadurch gekennzeichnet, dass** die Einrichtung (9) zum Auswerten der Funktelegramme (7) Mittel zur optischen und / oder akustischen Signalisierung (14) von Informationen über
• die Verkehrsdichte, insbesondere über Staubildung und - auflösung und/oder
• den Straßenzustand, insbesondere Rutschfestigkeit und / oder
• freie Parkplätze und / oder
• Verkehrsunfälle, insbesondere zur Weiterleitung an Rettungsdienste und zur Vermeidung von Folgeunfällen und / oder
• das Straßennetz, insbesondere hinsichtlich neuer Straßen oder Baustellen umfasst.

6. Kommunikationseinrichtung (6) nach Anspruch 4 oder 5, **dadurch gekennzeichnet, dass** die Einrichtung (9) zum Auswerten der Funktelegramme (7) Mittel zur optischen und / oder akustischen Signalisierung (14) von Informationen über den eigenen Aufenthaltsort umfasst, wobei mindestens ein Bezugspunkt, insbesondere die Koordinaten einer Sendebake oder die durch Kartenkorrelation, GPS usw. ermittelten Aufenthaltsorte anderer Fahrzeuge (3, 4, 5, 8, 8') zugrundegelegt ist.

7. Kommunikationseinrichtung (6) nach einem der Ansprüche 4 bis 6, **dadurch gekennzeichnet, dass** die Einrichtung (9) zum Auswerten von Funktelegrammen (7) bei Flottenmitgliedern, insbesondere des öffentlichen Personennahverkehrs (ÖPNV), von Speditionen und Mietwagenfirmen, Mittel zur optischen und / oder akustischen Signalisierung (14) von Informationen über Aufenthaltsort, Status, Routenplanung usw. anderer Flottenmitglieder umfasst.

8. Kommunikationseinrichtung (6) nach einem der Ansprüche 4 bis 7, **dadurch gekennzeichnet, dass** die Funktelegramme (7) für die DSRC - Frequenzen (dedicated short range communication) 5,8 GHz und / oder 64 GHz ausgelegt sind, wobei die Reichweite des Funktelegramms (7) ca. 100 m beträgt und die Datenrate im Mbit/sec-Bereich liegt.
